# EUROPEAN PATENT APPLICATION

(11) **EP 1 279 338 A1**
(43) Date of publication of application: **29.01.2003**
(21) Application number: 01925581.9
(22) Date of filing: 25.04.2001
(51) Int. Cl.: A23C 15/02, A23C 21/04, A23D 7/005, A23L 1/36, A23G 1/00, A23D 9/00

(54) **USE OF OLIVE OIL FOR THE PRODUCTION OF MARGARINES, BUTTERS, FATS, WHEYS, CREAMS, CHOCOLATE AND THE LIKE**

(30) Priority: 05.05.2000 ES 200001131; 18.12.2000 ES 200003020
(71) Applicant: Ciuraneta Masip, Luis, 08024 Barcelona (ES)
(72) Inventor: Ciuraneta Masip, Luis, 08024 Barcelona (ES)
(74) Representative: Morgades Manonelles, Juan Antonio
(86) International application number: ES0100154
(87) International publication number: WO01084944

(57) **Abstract**

According to the invention, virgin olive oil, preferably extra virgin olive oil, is used for the production of margarines, butters, fats, wheys, creams, chocolate and the like, thereby profiting from the excellent qualities of olive oil is. It is also used in vegetable pastes made from dried products such as almond, hazelnut, walnut, pistachio or plants and herbs such as thyme, rosemary, oregano or camomile. Olive oil is used in an amount equivalent to the amount of vegetable fats replaced by said olive. Said amount may range up to 65%. This makes it possible to obtain more wholesome products having, among others, the quality of balancing cholesterol, preventing cancer, protecting the stomach and positively influencing the reduction of glucose levels.

## Description

The present patent application relates, as stated in its title, to the "USE OF OLIVE OIL FOR THE PRODUCTION OF MARGARINES, BUTTERS, FATS, WHEYS, CREAMS, CHOCOLATE AND THE LIKE".

Healthy properties of olive oil are well known, which allow to be considered as the best of all of the edible oils.

It is also known that the daily consumption of olive oil reduces the risk of cardiovascular diseases. It has been found that consumption of olive oil prevents coronary affections as well as arterioscleroses, and it improves the liver and the pancreas operation, the hepatobiliary level and the intestinal level. It also has a protective and tonic effect in the epidermis and it improves the metabolic functions of the endocrine system. It further assists to the calcium absorption in the bony system. The olive oil is an effective remedy to prevent breast cancer and, at a pancreatic level, it assists in the calcium, phosphorus, magnesium, iron and zinc absorption. It also reduces the blood pressure and the insulin sensitivity of the diabetics and thanks to its antioxidant properties cell aging is prevented. Olive oil allows reducing inflammation in all the allergic processes and in the autoimmune diseases like the rheumatoid arthritis.

Olive oil consumption involves a great monounsaturated fat source. The monounsaturated fat has become a new formula against cancer, owing to research intended to find methods to prevent the effects of the most common tumours. It has been found that certain types of fat acids reduce the risk of developing mammary tumours. The monounsaturated fat acids reduce the effect of mammary tumours, while the polyunsaturated ones increase the effects and the probability of suffering from metastasis of this type of tumour. Studies have confirmed this theory and they have determined that fat acids present in abundance, for example, in the olive oil, are able to considerably reduce the risk of developing breast cancer.

The main purpose of the present invention is to provide the use of olive oil for the production of margarines, butters, fats, wheys, creams, chocolate and the like, taking advantage of its excellent qualities. More specifically, the vegetable fat contents in said products is replaced with olive oil, as it will be disclosed hereinafter.

One of the main reasons that olive oil has a beneficial effect on health is the oleic acid that is the main fat acid of the olive oil. It is a monounsaturated fat acid. The olive oil also contains saturated fat acids (8-14%), polyunsaturated fat acids (4-20%), and other main constituents, particularly antioxidants, like E Vitamin and polyphenols. Beneficial effects on health of olive-oil are due both to the high contents of monounsaturated fat acids and to the high contents of antioxidant substances. If saturated fat acids rising bad cholesterol are replaced with monounsaturated fat acids from olive oil, it is possible to reduce the total cholesterol and the LDL (bad cholesterol) concentrations without reducing the HDL levels (good cholesterol). Therefore, the olive oil, with its high monounsaturated fat acids contents, can contribute to prevention and treatment of the dominant risk factor in arteriosclerosis and to prevention of coronary heart condition.

The olive, from which the olive oil is obtained, is formed by oil and water, the rest being bone and vegetable tissue. Any olive variety provides an excellent virgin olive oil, each one with its own characteristics, provided that the olive is healthy, pressed on the same harvest day and the oil is appropriately stored.

According to the invention, virgin olive oil is used for the production of margarines, butters, fats, wheys, creams, chocolate and the like, and more preferably, extra virgin olive oil. There is also provided the use of the socalled ecological olive oil corresponding to the oil obtained from olive trees planted with organic and fumigated fertilizers, as appropriate, with products authorized by the competent organizations, only using completely natural products and substances.

The virgin olive oil is obtained directly from the olive by means of mechanical processes, e.g. washing, grinding and pressing. Solvents and decolourants of any type are not used. Artificial antioxidants are not added too, since it contains them natural, and it does not lose any of its main natural vitamins (A, D, E and K) and it also has a high monounsaturated fats contents that, in an ordinary consumption, they contribute to decrease the concentration of cholesterol in the blood. The virgin olive oil has an organoleptic mark non lower than 5,5, and an maximum free acidity expressed in oleic acid of 2 gr/100 gr, whilst the extra virgin olive oil has a organoleptic mark non lower than 6,5, with a maximum free acidity of 1 gr/100 gr.

The virgin olive oil has some characteristics well distinguished from the other olive oils, since the olive has been picked under perfect conditions, especially the thermal conditions, which have not made the oil become altered. In this case, the olive has not been subjected to any treatment other than washing, decantation and filtering by mechanical means, as stated before. The virgin olive oil is the natural juice of the olive which, due to the way it is obtained, preserves all the natural organoleptic and chemical characteristics, as colour, flavour and natural aromas provided only by the earth, the variety and the climatic factors. Their qualities are irreproachable and excellent, this being the only natural oil, since it has not suffered from chemical manipulations and it does not contain strange additions. If the virgin olive oil is obtained from olives which trees have been carefully treated in a completely natural way, that is to say, if it is ecological olive oil, as stated before, the qualities thereof are fully extraordinary and beneficial for the purposes of the present invention.

According to a first aspect of the invention, it has been found that the use of olive oil for the production of margarine is advantageous. As it is known, the margarine is a fat substance, with a soft consistency, from certain animal fats and vegetable oils. The margarine can be vegetable or mixed, and it is composed by 80% of fat, the rest being water, emulsionants, monoglicerids, salt and milk, wherein vitamin A is sometimes added to. The conventional margarine production process, that is very similar to that of the butter, starts from fat, milk, salt, vitamins, colouring and bacterial cultures as raw material.

The use of olive oil according to the invention instead of the vegetable fats from foodstuffs as butter, margarine, chocolate, etc. allows to avoid the chemical treatment they are subjected to. Indeed, the first operations in the conventional margarine production process consist in preparing the vegetable oils by pressing, grinding and crushing the oleaginous seeds. The flour obtained in this process is heated up to extract the oil that it is to be subsequently refined. Refining can not be carried out without using chemical substances. By way of an example, to carry out the refining operation a soda solution is used to remove the fat acids and alumina silicate for blenching. By conventional process a natural product is not therefore obtained.

The invention provides the replacement of the vegetable fats in the margarine elaboration process with olive oil to improve the quality of this product, thus obtaining a healthier margarine from a nutritious point of view. In this sense, the fact should be stresed that it has been proven that the margarine is nutritionally less healthy than the oil, and more less than the olive oil. The quantity of margarine that statistically are consumed can be considered to be enough to negatively modify the cholesterol levels and to increase the arteriosclerosis risk. According to the present invention, the use of olive oil for the production of margarines has the advantage that the production of the socalled "trans" fat acids can be avoided. Said fat acids are substitute of the essential fat acids in the hydrogenation conventional processes. Hydrogenation is carried out in the conventional processes to recover fats that, otherwise, would be inedible. This process consists in mixing the oils to be used by adding powdered nickel and passing a gas hydrogen flow through the mixture that is at a temperature of 180°C. This operation, which purpose is to saturate the unsaturated fat acids of the oil, destroys, however, certain unsaturated acids particularly useful for the organism.

Elimination of the "trans" fat acids also influences positively in improving the saturaded/unsaturated fat ratio of the margarine. Moreover, the use of high quality olive oil for the production of margarine according to the invention is also healthy to take care of the cholesterol.

Therefore, the purpose is to include, among the elements in the production of the margarine, olive oil in an amount corresponding to the amount of vegetable fats, which may range up to 65%.

According to a further aspect of the invention, there is provided the use of olive oil for the production of butter. As it is known, the butter is an unctuous fat product, that exhibtis a clear yellow color, obtained by shaking or agitation of milk or cream. The process for obtaining butter starts with centrifuging milk to obtain a cream with a high contents of fat matter. A pasteurization process is subsequently carried out, lactic ferments are added to and then is subjected to maturation so that approppirate flavour and aroma is thus obtained. With the shaking it is possible to form the grains of butter, by agglomeration of fat globules. Finally, whey is eliminated, washed out with cold water and brought into homogeneity. The butter has a fat contents of 84%, the rest being water and a high saturated fat contents (of the order of 50%). Incorporation of olive oil in amounts up to 65% in the production of butter allows to notably improve the healthiness of this products.

The invention also provides the use of olive oil for the elaboration of chocolate. Currently, the chocolate produced with cocoa butter, cocoa, sugar and other additional substances, may additionally contain up to 5% of vegetable fats different from the cocoa butter, which allows to reduce and to speed up the productive process.

The invention proposes, however, to replace the vegetable fats in the chocolate with virgin olive oil. The well-known beneficial effects of the chocolate, that is to say, prevention of cardiovascular pain as well as their exciting and tonic character due to the high teobromine levels, a nitrogenated substance similar to the caffeine that makes the chocolate a product that provides the intellectual activity, in combination with the beneficial effects provided by the olive oil, give rise to a very wholesome product.

By using virgin olive oil or extra virgin olive oil to produce margarines, butters, fats, wheys, creams, chocolate and the like, such products become more beneficial for health and, therefore, they are part of a healthy feeding taking advantage of the good properties of the olive oil, as it has been detailed in the present specification. It should be pointed out the fact that many of the mentioned products, produced in a conventional way, are usually considered as non basic foods and an occasional consumption thereof is suggested. With the use of the olive oil according to the present invention, such foods can not be considered as non basic for an appropriate food since the oil, as stated before, is specially appropriate to balance the cholesterol, to prevent cancerigenic diseases, to take care of the stomach, as well as to positively influence in reduction of glucose levels improving the sensibility to the insulin as well as it is anticancerigenic, among other qualities.

The present invention also proposes the use of the olive oil in vegetable pastes from dried fruits and the like. Said vegetable pastes are constituted from dried fruits selected from at least one of the following ones: almond, hazelnut, walnut, pistachio.

The mentioned nutritious products comprise vegetable pastes formed alternatively by plants and field herbs, said plants and herbs being selected from at least one of the following ones: thyme, rosemary, oregano, camomile.

The food composition according to the invention comprises preferably the use of virgin olive oil, extra virgin olive oil or alternatively, ecological olive oil, in an amount of up to 65% of olive oil.

According to another feature of the invention, the dried fruits paste comprises (by weight) 55 to 80% dried fruits paste; 5 to 1% salt; 9,5 to 22,25% emulgents; 9,5 to 22,25% olive oil and water. Preferably, this dried fruits paste comprises 65% dried fruits paste; 0,8 salt; 17,1% emulgents; 17,1% olive oil; and water. According to the invention, said emulgents are selected from lecitines of leguminous and germ of cereals.

The production of this dried fruits paste is carried out by using a grinding device comprising hammered knives, a blender intended to perform the mixture of the ingredients and a packager for the product. The dried fruit is first cut up into pieces and reduced to dust, and automatically passed into the blender that mixes all the ingredients until they form a homogeneous compound. In this point, the compound is passed into a container where it is left to rest for some hours. Packing of the cream is subsequently carried out in glass or plastic containers.

The obtained product is a very wholesome product that combines the nutritional characteristics of dried fruits and/or plants and field grasses with the olive oil.

By way of an example, the almond is a source of - calcium and magnesium. A portion of 30 g covers the daily adult's necessities of magnesium (from 20 to 25% and 10% calcium). Its lipidic contribution is constituted by monounsaturated fat acids, which are kown to have protective cardiovascular virtues. Its B vitamin and E vitamin contents is considerable, the latter having protective and antiageing properties, also contributing to the vascular protection.

On the other hand, the hazelnut is quite rich in iron and folic acid, this being a good complement to help-the red globules synthesis. The lipidic profile of the hazelnut is very well balanced, as it provides unsaturated fat acids and a minimum fraction of saturated fat acids. It is rich in E vitamin, since a small portion of 30 g covers more than 80% of a person's daily necessities.

The walnuts that can also be part of the vegetable paste, which is the object of the use of the olive oil of the present invention, have a very high content in polyunsaturated acids of alfalinoleic acid, and they are the fruit having a higher contents thereof. The walnuts are very recommendable throughout the year as they allow to rebalance the food lipidic contribution, since they are containing identical fat acids to those of the fat fishes, which have a very beneficial effect for cardiovascular diseases prevention. The walnuts are also a good source of minerals and folic acid, as well as arginine, that is an amino acid involved in cardiovascular diseases prevention.

On the other hand, the pistachios have a high mineral contents, especially iron, magnesium, calcium and potassium. They are strongly remineralizable and they provide a high amount of group B vitamins. Their high fiber contens makes them very effective to fight against constipation. Pistachios are- very well balanced from a lipidic point of view, since their contents in saturated fat acids is still modest and the monounsaturated ones are prevailing.

The product obtained according to the present invention is extremely advisable in people's daily diet, thanks to the nutritional characteristics previously pointed out, especially those related to the use of olive oil according to the invention.

Once having been sufficiently described what the use provided with the present invention consists in, it is understood that any detail modification can be introduced as appropriate, provided that variations may alter the essence of the invention as summarised in the appended claims.

## Claims

1. "USE OF OLIVE OIL FOR THE PRODUCTION OF MARGARINES, BUTTERS, FATS, WHEYS, CREAMS, CHOCOLATE AND THE LIKE" **characterized in that** the use of olive oil is carried out in replacement of the vegetable fats in vegetable pastes made up of dried fruits.

2. "USE OF OLIVE OIL FOR THE PRODUCTION OF MARGARINES, BUTTERS, FATS, WHEYS, CREAMS, CHOCOLATE AND THE LIKE" as claimed in claim 1, **characterized in that** said vegetable pastes comprise dried fruits selected from at least one of the following ones: almond, hazelnut, walnut, pistachio.

3. "USE OF OLIVE OIL FOR THE PRODUCTION OF MARGARINES, BUTTERS, FATS, WHEYS, CREAMS, CHOCOLATE AND THE LIKE" as claimed in claim 1, **characterized in that** said vegetable pastes comprise plants and field herbs.

4. "USE OF OLIVE OIL FOR THE PRODUCTION OF MARGARINES, BUTTERS, FATS, WHEYS; CREAMS, CHOCOLATE AND THE LIKE" as claimed in claim 3, **characterized in that** said plants and field herbs are selected from thyme, rosemary, oregano, camomile.

5. "USE OF OLIVE OIL FOR THE PRODUCTION OF MARGARINES, BUTTERS, FATS, WHEYS, CREAMS, CHOCOLATE AND THE LIKE" as claimed in any of the preceding claims, **characterized in that** the olive oil is virgin olive oil.

6. "USE OF OLIVE OIL FOR THE PRODUCTION OF MARGARINES, BUTTERS, FATS, WHEYS, CREAMS, CHOCOLATE AND THE LIKE" as claimed in any of the preceding claims, **characterized in that** the olive oil is extra virgin olive oil.

7. "USE OF OLIVE OIL FOR THE PRODUCTION OF MARGARINES, BUTTERS, FATS, WHEYS, CREAMS, CHOCOLATE AND THE LIKE" as claimed in any of the preceding claims, **characterized in that** the olive oil is ecological olive oil.

8. "USE OF OLIVE OIL FOR THE PRODUCTION OF MARGARINES, BUTTERS, FATS, WHEYS, CREAMS, CHOCOLATE AND THE LIKE" as claimed in any of the preceding claims, **characterized in that** the composition of this products includes up to 65% olive oil.

9. "USE OF OLIVE OIL FOR THE PRODUCTION OF MARGARINES, BUTTERS, FATS, WHEYS, CREAMS, CHOCOLATE AND THE LIKE" as claimed in any of the preceding claims, **characterized in that** said dried fruits paste comprises (by weight) 55 to 80% dried fruits paste; 5 to 1% salt; 9,5 to 22,25% emulgents; 9,5 to 22,25% olive oil, and water.

10. "USE OF OLIVE OIL FOR THE PRODUCTION OF MARGARINES, BUTTERS, FATS, WHEYS, CREAMS, CHOCOLATE AND THE LIKE" as claimed in claim 1, **characterized in that** said dried fruits paste comprises (by weight) 65% dried fruits paste; 0,8 salt; 17,1% emulgents; 17,1% olive oil; and water.

11. "USE OF OLIVE OIL FOR THE PRODUCTION OF MARGARINES, BUTTERS, FATS, WHEYS, CREAMS, CHOCOLATE AND THE LIKE" as claimed in any of the preceding claim, **characterized in that** said emulgents are selected from lecitines of leguminous, and germs of cereals.

12. "USE OF OLIVE OIL FOR THE PRODUCTION OF MARGARINES, BUTTERS, FATS, WHEYS, CREAMS, CHOCOLATE AND THE LIKE" as claimed in any of the preceding claims, **characterized in that** the composition of said products includes up to 65% olive oil.

13. "USE OF OLIVE OIL FOR THE PRODUCTION OF MARGARINES, BUTTERS, FATS, WHEYS, CREAMS, CHOCOLATE AND THE LIKE" as claimed in any of the preceding claims, **characterized in that** said dried fruits paste comprises (by weight) 55 to 80% dried fruits paste; 5 to 1% salt; 9,5 to 22,25% emulgents; 9,5 to 22,25% olive oil and water.

14. "USE OF OLIVE OIL FOR THE PRODUCTION OF MARGARINES, BUTTERS, FATS, WHEYS, CREAMS, CHOCOLATE AND THE LIKE" as claimed in any of the preceding claims, **characterized in that** said dried fruits paste comprises (by weight) 65% dried fruits paste; 0,8 salt; 17,1% emulgents; 17,1% olive oil; water.

15. "USE OF OLIVE OIL FOR THE PRODUCTION OF MARGARINES, BUTTERS, FATS, WHEYS, CREAMS, CHOCOLATE AND THE LIKE" as claimed in any of claims 5 to 9, **characterized in that** said emulgents are selected from lecitines of leguminous, and of germ of cereals.
